# EUROPÄISCHE PATENTSCHRIFT

(11) **EP 3 392 545 B1**
(45) Veröffentlichungstag und Bekanntmachung des Hinweises auf die Patenterteilung: **30.10.2019**
(21) Anmeldenummer: 17000685.2
(22) Anmeldetag: 21.04.2017
(51) Int. Cl.: F16M 11/20, G06F 1/16

(54) **KOMMUNIKATIONSVORRICHTUNG**
COMMUNICATION DEVICE
DISPOSITIF DE COMMUNICATION

(43) Veröffentlichungstag der Anmeldung: 24.10.2018
(73) Patentinhaber: Adams, Manuel, 38723 Seesen (DE)
(72) Erfinder: Adams, Manuel, 38723 Seesen (DE)
(74) Vertreter: Ahrens, Thomas

(56) Entgegenhaltungen:
- DE-U1-202012 101 431
- GB-A- 2 505 867
- US-A1- 2010 261 979
- US-A1- 2012 014 056

## Beschreibung

Die vorliegende Erfindung betrifft eine Vorrichtung zur Kommunikation mithilfe mehrerer Anzeigegeräte, wie Displays, Smartphones, Tablet-Computer oder dergleichen.

Displays sind im Sinne der vorliegenden Erfindung Bildschirme oder auch alle sonstigen Mittel, die geeignet sind, bei entsprechender Ansteuerung optische Signale wiederzugeben, wie insbesondere auch Fotografien, Videoclips, Filme oder dergleichen. Heutzutage sind derartige Displays oftmals so gestaltet, dass über ihre Oberfläche auch eine Eingabe möglich ist, wozu resistive, kapazitative oder ähnliche Realisierungen verwendet werden. Dann werden diese Displays auch als berührungsempfindlicher Bildschirm, als Touchscreen oder dergleichen bezeichnet.

Es sind weiterhin Mobiltelefone bekannt, die neben ihren Mitteln zur drahtlosen Kommunikation auch umfangreiche Computer-Funktionalitäten ermöglichen. Derartige Mobiltelefone werden heutzutage üblicherweise als Smartphones bezeichnet. Sie weisen oftmals einen Touchscreen auf, über den sowohl optische Anzeigen als auch Eingaben von einem Nutzer ermöglicht werden.

Es sind weiterhin sogenannte Tablet-Computer bekannt, die tragbar und flach sind und auch einen Touchscreen aufweisen.

Durch die genannten Displays, Smartphones und Tablet-Computer ist es möglich, dass ein Nutzer mit einem elektronischen Gerät kommunizieren kann, wie beispielsweise bei einem elektronischem Buch (E-Book), einem Lernprogramm, einem Videospiel oder dergleichen. Der Nutzer kann jedoch zusätzlich oder stattdessen auch mit anderen Nutzern kommunizieren, wie bei dem Austausch von Textnachrichten, bei entsprechenden Spielen oder dergleichen.

Es hat sich bewährt, dass Displays, Smartphones, Tablet-Computer oder dergleichen durch eine Aufnahmevorrichtung bzw. Halterung in eine bestimmte Position gebracht werden, so dass sie für den Nutzer bequem und praktisch verwendet werden können. Allgemein bekannt dafür sind beispielsweise Halterungen, die in einem Fahrzeug verwendet werden. So beschreibt beispielsweise die deutsche Offenlegungsschrift DE 10 2012 001 674 A1 eine besondere Aufnahmevorrichtung, die es ermöglicht, dass eine Bildschirmanzeigevorrichtung oder ein Gerät mit einer solchen Anzeigevorrichtung, wie ein Tablet-Computer, in eine Nichtgebrauchsstellung und in eine Gebrauchsstellung gebracht werden kann.

Die deutsche Gebrauchsmusterschrift DE 20 2014 004 149 U1 beschreibt eine Halterung für ein Display, einen Tablet-PC oder ein ähnliches elektronisches Gerät, die neben einer Aufstellung auf einer beliebig geformten Fläche eine Positionierung des Gerätes in jeder beliebigen Stellung zur Halterung gestatten soll.

Die deutsche Gebrauchsmusterschrift DE 20 2012 101 431 U1 beschreibt eine Stütze für ein elektronisches Produkt. die einen Hauptkörper umfasst, der ein Vielflächner ist und eine Bodenfläche und weitere Flächen aufweist. Die weiteren Flächen schließen mit der Bodenfläche einen Winkel von kleiner als 90 Grad ein und sind mit einer Klebeschicht versehen, durch die ein elektronisches Gerät, wie ein Handy, ein Tablet-PC usw., mit der entsprechenden Fläche haftend verbunden werden kann. Aus dieser Schrift ist jedoch nicht bekannt, dass die elektronischen Geräte miteinander oder mit anderen Geräten über die dortige Stütze kommunizieren können.

Es ist weiterhin bekannt, Smartphones, Tablet-Computer oder dergleichen mittels einer Andockstation - die im Folgenden auch Dockingstation genannt wird - untereinander oder mit externen Geräten zu verbinden. So ist aus der Offenlegungsschrift US 2012/0014056 A1 eine Dockingstation bekannt, durch die ein oder mehrere tragbare elektronische Geräte mit weiteren Geräten eines Netzwerks verbunden werden können. Die dortige Dockingstation weist eine drehbare Andockfläche mit mindestens einer Steckverbindung auf, über die die tragbaren elektronischen Geräte verbunden werden können. In einem Ausführungsbeispiel ist die Dockingstation pyramidenförmig ausgebildet und weist vier Steckverbindungen für tragbare elektronische Geräte auf.

Aus der Offenlegungsschrift US 2010/0261979 A1 ist ein modularer Patientenmonitor bekannt mit einer Dockingstation, in der ein großer Bildschirm integriert ist, und die so konfiguriert ist und einen entsprechenden Anschluss aufweist, dass sie ein tragbares Gerät aufnehmen kann. Die Dockingstation verfügt über eine eigenständige Patientenüberwachung in Bezug auf einen ersten Parametersatz, wovon zumindest ein Teil gleichzeitig auf dem großen Bildschirm angezeigt wird. Das tragbare Gerät verfügt außerdem über eine eigenständige Patientenüberwachungsfunktion in Bezug auf einen zweiten Parametersatz, wovon zumindest ein Teil gleichzeitig auf einem kleinen Bildschirm angezeigt wird, der in dem tragbaren Gerät integriert ist. Bei einer besonderen Ausführung des dortigen Patientenmonitors können auch zwei der tragbaren Geräte aufgenommen werden. Aus der Offenlegungsschrift GB 2505867 A ist ein Point-of-Sale (POS) Terminal zum Verarbeiten von Geschäftsvorgängen mit einem tragbaren elektronischen Gerät bekannt, welches einen Bildschirm und mindestens einen Prozessor aufweist. Das tragbare Gerät ist konfiguriert, um Benutzereingaben zu empfangen und die Verarbeitung der Geschäftsvorgänge als Reaktion auf die Benutzereingaben zu steuern. Das dortige POS-Terminal weist weiterhin ein Kommunikationsmodul auf, das einerseits so konfiguriert ist, dass es mit dem tragbaren elektronischen Gerät verbunden ist, und weiterhin so konfiguriert ist, dass es eine Kommunikation zwischen dem tragbaren elektronischen Gerät und wenigstens einem Peripheriegerät außerhalb des POS-Terminals ermöglicht. Dabei ist das tragbare elektronische Gerät bevorzugterweise ein Tablet Computer mit mindestens einem POS-Element, wie einem Strichcodeleser und einem Kartenleser. Das dortige Kommunikationsmodul ist bevorzugterweise eine Dockingstation und kann Verbindungen zu einem Drucker, zu einer Kassenlade, einem POS-Netzwerk, zu einem anderen tragbaren elektronischem Gerät und dergleichen ermöglichen, so dass das tragbare elektronische Gerät mit diesen Peripheriegeräten kommunizieren kann. Bei besonderen Ausführungen des dortigen POS-Terminals ist es auch möglich, dass zwei der tragbaren elektronischen Geräte vorhanden sind.

Aus dem genannten Stand der Technik ist jedoch kein Gegenstand bekannt, der in der erfindungsgemäßen Weise mehrere Displays, Smartphones, Tablet-Computer oder dergleichen aufnehmen kann und es außerdem ermöglicht, dass diese miteinander auf einfache Weise kommunizieren können.

Es ist daher die Aufgabe der vorliegenden Erfindung, dass mehrere der genannten Anzeigegeräte, wie Display, Smartphone, Tablet-Computer, mechanisch aufgenommen werden und außerdem auf einfache Weise miteinander kommunizieren können.

Diese Aufgabe wird gelöst durch die Kommunikationsvorrichtung nach Anspruch 1. Durch die Unteransprüche werden vorteilhafte Weiterentwicklungen beschrieben.

Die erfindungsgemäße Kommunikationsvorrichtung weist eine Displayanordnung und eine Steuervorrichtung auf. Dabei ist die Displayanordnung im Wesentlichen dafür gedacht, Displays, Smartphones, Tablet-Computer oder dergleichen, die im Folgenden gemeinsam und - trotz der teilweise umfangreichen Funktionsmöglichkeiten - vereinfacht auch als Anzeigegeräte bezeichnet werden, mechanisch aufzunehmen. Dafür umfasst die Displayanordnung einen Körper, der entsprechende Befestigungsmittel aufweist. Dieser Körper hat außerdem eine besondere Form. Denn er ist erfindungsgemäß pyramidenähnlich gestaltet. Das heißt, er weist eine Grundfläche, eine Deckfläche sowie auch eine bestimmte Anzahl von benachbarten Seitenflächen auf. Es hat sich besonders bewährt, wenn der Körper der Displayanordnung maximal sechs Seitenflächen aufweist. Damit wird erreicht, dass die zugehörigen Nutzer nicht ohne Weiteres auf die Anzeigegeräte ihrer Nachbarn schauen. Zur Abgrenzung gegenüber dem Stand der Technik ist außerdem vorgesehen, dass mindestens vier der Seitenflächen vorgesehen sind. Diese Seitenflächen sind im unteren Bereich, also nahe der Grundfläche, breiter als im oberen Bereich. Dort laufen sie jedoch nicht spitz aufeinander zu, wie es bei Pyramiden üblich ist. Stattdessen ist dort die Deckfläche vorgesehen. Durch diese Gestaltung ist es möglich, einen Schalter bzw. Taster auf der Oberseite der Displayanordnung anzubringen, der einfach bedient werden kann, beispielsweise zum Einschalten der Vorrichtung und/oder zur Auswahl von vorgegebenen Betriebsmodi. An dem Körper der Displayanordnung können weitere Schalter angeordnet werden, durch die weitere Eingaben möglich sind, wie für eine weitere Auswahl von Betriebsmodi, zur Beantwortung von Aufgaben und Fragen und/oder dergleichen.

Die Displayanordnung bzw. Teile davon, wie der Körper, die Grundfläche, die Deckfläche und/oder die Seitenflächen, können auf günstige Weise durch Spritzgießen, Formpressen und/oder mittels 3D-Druck hergestellt werden.

Die Steuervorrichtung, die erfindungsgemäß vollständig innerhalb des Körpers der Displayanordnung angeordnet ist, ermöglicht die Stromversorgung und/oder die Verarbeitung von Kommunikationssignalen, die über geeignete Verbindungswege zwischen den Anzeigegeräten, den Schaltern und/oder der Kommunikationsvorrichtung ausgetauscht werden. Diese Verbindungswege können drahtgebunden und/oder drahtlos sein. Damit wird - je nach Betriebsmodus auch eine Kommunikation zwischen den einzelnen Anzeigegeräten ermöglicht. Die Steuervorrichtung kann dabei derart mit den bereits genannten Anzeigegeräten sowie mit weiteren Geräten, wie beispielsweise Head-Mounted-Displays (siehe unten), verbunden sein, dass sie als Zentraleinheit arbeitet. Dabei kann sie getätigte Eingaben zentral erfassen und anwendungsspezifisch an die genannten Geräte ausgeben. Damit kann eine direkte oder indirekte Kommunikation zwischen den genannten Geräten ermöglicht werden.

Die erfindungsgemäße Vorrichtung erlaubt somit selbstverständlich auch, dass die Nutzer der genannten Anzeigegeräte sowohl mit der Vorrichtung an sich als auch miteinander kommunizieren können. Damit können verschiedene Modi ermöglicht werden, wie insbesondere zum Lernen und Prüfen im Unterricht, bei Assessmentcentern, bei psychotherapeutischen Behandlungen und dergleichen. Es ist natürlich auch möglich, die erfindungsgemäße Vorrichtung für Spiel und Spaß zu verwenden, wie in einem Gastronomiebetrieb, einer Bar, einem Cafe oder dergleichen.

Damit die erfindungsgemäße Kommunikationsvorrichtung möglichst portabel bzw. mobil ist, ist eine eigene Stromversorgung vorgesehen, die beispielsweise als aufladbare Batterie ausgebildet ist. Bevorzugterweise ist diese Energieversorgung ein Teil der Steuervorrichtung. Daher ist eine erste Verbindung vorgesehen, die drahtgebunden und/oder drahtlos - beispielsweise induktiv, kapazitativ - sein kann und die die Displayanordnung und/oder die Anzeigegeräte bzw. die oben genannten weiteren Geräte mit elektrischer Energie versorgt. Eine weitere Verbindung der genannten Art kann außerdem dafür vorgesehen sein, die in der erfindungsgemäßen Kommunikationsvorrichtung vorhandene aufladbare Batterie von außen zu laden.

Es ist weiterhin eine zweite Verbindung vorgesehen, die zur Ansteuerung der Anzeigegeräte und/oder der weiteren Geräte vorgesehen ist und so beispielsweise vorgegebene Modi schalten kann. Diese Verbindung kann ebenfalls drahtgebunden und/oder drahtlos sein, wie beispielsweise mittels WLAN, Bluetooth, oder dergleichen.

Dabei ist es ebenfalls möglich, dass die erste bzw. die zweite Verbindung derart ausgebildet ist, dass sowohl elektrische Energie als auch Ansteuerungssignale übertragen werden können.

Sofern diese erste Verbindung bzw. die zweite Verbindung zumindest teilweise drahtgebunden ist, hat es sich als vorteilhaft erwiesen, die genannten Anzeigegeräte und/oder die weiteren Geräte mittels einer Verbindung anzuschließen, die einen magnetischen Adapter aufweist. Ein derartiges Prinzip ist beispielsweise unter dem Namen znaps (siehe www.znaps.net) bekannt.

Die erfindungsgemäße Kommunikationsvorrichtung kann auch eigene Audio-Wiedergabemittel aufweisen, wie insbesondere einen oder mehrere Lautsprecher und zugehörige Ansteuerungsstufen. Damit kann der gewünschte Modus, wie Lernen, Prüfen, Spielen, entsprechend unterstützt werden.

Für eine Kommunikation mit externen Geräten außerhalb der erfindungsgemäßen Kommunikationsvorrichtung weist diese bevorzugterweise auch entsprechende Mittel zur drahtlosen Kommunikation auf, wie für WLAN, Bluetooth oder dergleichen. Diese externen Geräte können sich in Reichweite befinden, wie beispielsweise in zugehörigen Gaststätten, Bars, Cafés, Versammlungsräumen oder dergleichen. Außerdem ist es auch möglich, die erfindungsgemäße Kommunikationsvorrichtung als Accesspoint zu verwenden, wodurch eine Signalverstärkung zur Vergrößerung der Reichweite ermöglicht wird.

Es ist jedoch auch eine Kommunikation mit weiter entfernten Netzen möglich, wie beispielsweise über eine Internetverbindung. Durch diese externe Anbindung können beispielsweise Bild- oder Videoinformationen empfangen und diese an die angeschlossenen Anzeigeräte bzw. weiteren Geräte weitergeleitet werden. Weiterhin ist auch ein Support, ein Update oder dergleichen möglich.

Wie bereits mehrfach erwähnt, ist die Steuervorrichtung derart gestaltet, dass neben den Anzeigegeräten noch weitere Geräte angeschlossen werden können, wie bevorzugterweise Head-Mounted-Displays (HMD), wozu im Sinne der vorliegenden Erfindung auch Videobrillen und dergleichen gehören.

Ein solches Head-Mounted-Display eignet sich besonders gut für die Wiedergabe von 3-dimensionalen Bildern, beispielsweise im Zusammenhang mit Virtual-Reality (VR), Augmented-Reality (AR) und/oder Mixed-Reality (MR) Anwendungen. Es ist außerdem möglich, dass zumindest einzelne der angeschlossenen Head-Mounted-Displays mit Mitteln zur Audiowiedergabe, wie Kopfhörern oder dergleichen, ausgestattet sind. Damit können sowohl Video- als auch Audiosignale von der Steuervorrichtung an den zugehörigen Nutzer abgegeben werden.

Es ist weiterhin möglich, dass zumindest einzelne der verwendeten Head-Mounted-Displays derart gestaltet sind, dass die Video- und/oder Audiovideogabe über Smartphones erfolgt, die mittels einer geeigneten Halterung in den Bereich eines Nutzer-Kopfes fixiert werden, wie beispielsweise bei der VR-Brille SAMSUNG Gear VR SM-R323.

Head-Mounted-Displays, die für VR-, AR- bzw. MR-Anwendungen vorgesehen sind, weisen üblicherweise auch Sensoren für die Erfassung ihrer Position, Lage und/oder Bewegung auf. Diese Sensoren können in das Head-Mounted-Display integriert oder auch außerhalb davon positioniert sein. Bevorzugterweise werden die Signale dieser Sensoren an die Steuervorrichtung geleitet und ausgewertet.

Wie bereits erwähnt, können die als Anzeigeräte bezeichneten Geräte sehr vielfältig sein und auch solche Geräte umfassen, die eigene Eingabemittel, Lage- bzw. Positionssensoren und/oder dergleichen aufweisen, wie beispielsweise Smartphones oder Tablet-Computer. In solchen Fällen ist es vorteilhaft, wenn die von diesen Eingabemitteln und/oder Sensoren abgegebenen Signale der Steuervorrichtung zugeführt und von dieser verarbeitet werden. Das kann in Abhängigkeit von dem gewählten Modus (wie Lernen, Prüfen, Spielen,...) dazu dienen, die an die Steuervorrichtung angeschlossenen Geräte, wie insbesondere auch zumindest einzelne der Head-Mounted-Displays, mit entsprechenden Videosignalen und/oder Audiosignalen anzusteuern.

Es ist weiterhin möglich, dass zusätzlich oder statt der genannten Anzeigegeräte Mittel verwendet werden, die zur Darstellung von holografischen Abbildungen dienen. Derartige Geräte sind beispielsweise bekannt unter dem Namen Holus (s.a. www.hplustech.com).

Bei einer weiteren Ausgestaltung ist die erfindungsgemäße Kommunikationsvorrichtung bzw. die Steuervorrichtung derart ausgebildet, dass zumindest einzelne der Funktionen Betriebsmodi erst dann realisiert werden können, wenn die Steuervorrichtung mittels einer speziellen Software (Applikation bzw. App) entsprechend programmiert wird.

Weitere Einzelheiten und Vorteile der vorliegenden Erfindung werden im Folgenden anhand von bevorzugten Ausführungsbeispielen mit zugehörigen Abbildungen erläutert. Dabei zeigen:
- Fig. 1: Seitenansicht auf eine Kommunikationsvorrichtung mit Displayanordnung und Steuervorrichtung
- Fig. 2: Draufsicht auf die Displayanordnung gemäß Fig. 1
- Fig. 3: Seitenansicht auf eine weitere Ausführung einer Displayanordnung
- Fig. 4: Draufsicht auf die Displayanordnung gemäß Fig. 3
- Fig. 5: Seitenansicht auf eine Displayanordnung für Smartphones
- Fig. 6: Draufsicht auf die Displayanordnung gemäß Fig. 5
- Fig. 7: Kommunikationssystem mit 6 Nutzern
- Fig. 8: Kommunikationssystem mit 6 Nutzern und 6 Head-Mounted-Displays
- Fig. 9: Kommunikationssystem gem. Fig. 8 erweitert um eine externe Anbindung

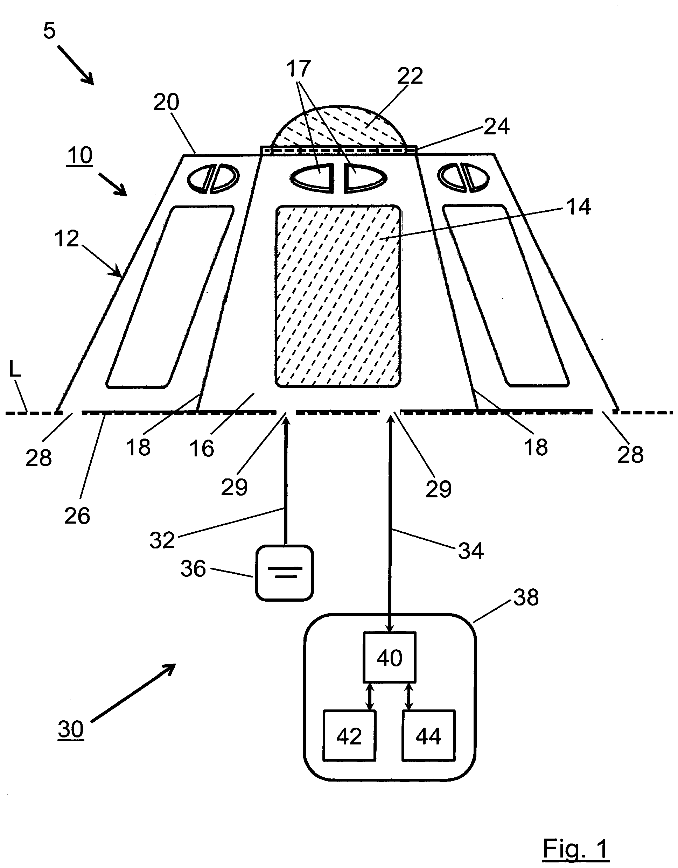

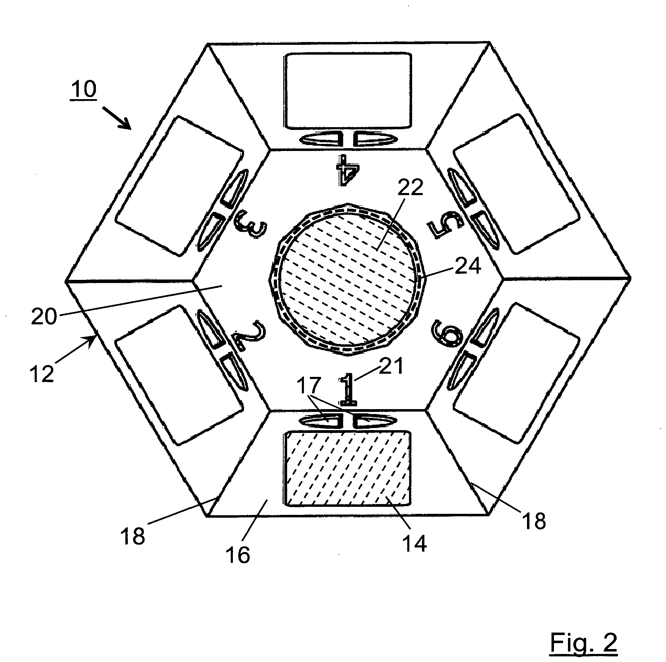

Fig. 1 zeigt eine Kommunikationsvorrichtung 5, wobei im oberen Teil eine Seitenansicht auf eine Displayanordnung 10 und unterhalb der Linie L ein Blockschaltbild für eine zugehörige elektronische Steuervorrichtung 30 dargestellt sind. Fig. 2 zeigt die Displayanordnung 10 in Draufsicht. Im Folgenden wird zunächst die Displayanordnung 10 beschrieben, wobei auf die beiden Fig. 1 und 2 gemeinsam verwiesen wird, sofern nicht anders erwähnt.

Die Displayanordnung 10 weist einen Körper 12 sowie eine Vielzahl von Anzeigeelementen 14 auf, wovon in Fig. 1 und 2 jeweils eins mittels Schraffur besonders hervorgehoben ist. Sie sind derart gestaltet, dass sie bei entsprechender Ansteuerung optische Signale wiedergeben können, wie insbesondere auch Fotografien, Videoclips, Filme oder dergleichen. Diese Anzeigeelemente 14, die auch als Touchscreen gestaltet sein können, werden im Folgenden auch Displays genannt. Der Körper 12 ist erfindungsgemäß pyramiden-ähnlich gestaltet und weist hier sechs Seitenflächen 16 auf. Diese Seitenflächen 16, die jeweils durch Kanten 18 von benachbarten Seitenflächen 16 getrennt sind, weisen jeweils eines der Displays 14 sowie oberhalb davon je zwei Navigationstasten 17 auf, die jeweils einem elektrischen Taster bzw. Schalter zugeordnet sind. Oberhalb der Seitenflächen 16 befindet sich eine Deckfläche 20, auf der eine Vielzahl von Ziffern 21 - hier "1" bis "6" - angeordnet sind, die bevorzugterweise beleuchtet sind und jeweils eine der Seitenflächen 16 bezeichnen. Außerdem befindet sich auf der Deckfläche 20 ein Betätigungselement 22 für einen weiteren elektrischen Schalter bzw. Taster, der mittels einer üblichen Schraubverbindung 24 mit der Deckfläche 20 verbunden ist. Bevorzugterweise sind die Schalter, die zu den Navigationstasten 17 und/oder 22 gehören, als Taster realisiert.

Unterhalb der Seitenflächen 16 befindet sich eine Grundfläche 26. Diese enthält bevorzugterweise eine Vielzahl von Befestigungsbohrungen 28. Dadurch ist es möglich, dass der Körper 12 mittels einer Schraubverbindung oder dergleichen an einer darunter liegenden Platte, wie einer Tischplatte oder ähnlich, verbunden werden kann. Eine solche Platte ist hier zwar nicht gezeigt; ihr Verlauf könnte jedoch dem der Linie L entsprechen. Die Grundfläche 26 weist außerdem eine Vielzahl von Öffnungen 29 auf, durch die Leitungen 32, 34 in das Innere des Körpers 12 geführt werden können.

Der Körper 12 besteht bevorzugterweise aus Kunststoff und kann mittels Formspritzverfahren, durch Spritzgießen, Formpressen und/oder durch ein sonstiges dem Fachmann bekanntes Herstellungsverfahren hergestellt werden. Dabei ist es möglich, den Körper 12 als Gesamtbauteil zu fertigen. Aus Konstruktionsgründen wird jedoch bevorzugt, die Seitenflächen 16 einzeln zu fertigen, durch Formschluss zu verbinden (z.B. mittels Steckverbindung) und/oder anschließend miteinander zu verkleben. Die übrigen Elemente des Körpers 12, wie Deckfläche 20 und Grundfläche 26, sind bei einem solchen Herstellungsverfahren separate Formteile. Alternativ können auch zumindest einzelne der Elemente des Körpers 12 oder auch der gesamte Körper 12 mithilfe eines 3D-Druckers gefertigt werden.

In Fig. 1 ist unterhalb der Linie L symbolisch ein Blockschaltbild für eine mögliche Steuervorrichtung 30 dargestellt. Dabei sind insbesondere eine elektrische Stromversorgung 36 und eine Steuereinheit 38 vorgesehen. Die Stromversorgung 36 wird bevorzugterweise von einer aufladbaren Batterie (hier nicht gezeigt) gespeist und gibt ihre elektrische Leistung über die elektrische Leitung 32 an das Innere des Körpers 12, wo zugehörige elektrische Verbindungen die Displays 14 und/oder die elektrischen Taster entsprechend mit der elektrischen Leistung verbinden. Dabei ist es möglich, dass die Batterie bzw. deren Behälter von unten an die Grundplatte 26 bzw. an eine Platte, auf der die Vorrichtung 5 steht, lösbar befestigt wird. Das erfolgt bevorzugterweise mittels eines Bajonettverschlusses. Alternativ oder zusätzlich kann die Stromversorgung auch dadurch realisiert werden, dass die notwendige Versorgungsspannung durch ein Netzteil geliefert wird. Dieses kann Teil der Steuervorrichtung 30 sein oder auch außerhalb davon angeordnet sein.

Die Steuereinheit 38 weist einen Prozessor 40 sowie einen Systemspeicher 42 und einen Arbeitsspeicher 44 auf. Eingangssignale für die Steuereinheit 38 sowie deren Ausgangssignale für die Displayanordnung 10 werden über die Signalleitung 34 geführt. Diese Signalleitung 34 ist bevorzugterweise als elektrische Leitung realisiert, über die entsprechende Signale geleitet werden können. Diese Signale sind bevorzugterweise digital und in geeigneter Weise moduliert. Es versteht sich jedoch, dass zusätzlich oder stattdessen auch analoge Signale mit zugehöriger Modulation verwendet werden können. Es ist außerdem möglich, dass die Signalleitung 34 derart realisiert ist, dass zumindest ein Teil der Signale auf drahtlose Weise übertragen werden kann, wie insbesondere auf optischem Wege, als Funkwellen (WLAN, Bluetooth, usw.) oder ähnlich.

Die Steuervorrichtung 30, die im Wesentlichen die Stromversorgung 36 und die Steuereinheit 38 enthält, ist in Fig. 1 unterhalb der Linie L und somit außerhalb der Displayanordnung 10 dargestellt. Dieses dient insbesondere der besseren Darstellung bzw. Übersichtlichkeit für die Beschreibung der vorliegenden Erfindung, die Anordnung der Steuervorrichtung 30 außerhalb der Displayanordnung 10 fällt jedoch nicht unter den Schutzumfang der Patentansprüche.

Es sei darauf hingewiesen, dass die Stromversorgung 36 und die Steuereinheit 38 erfindungsgemäß innerhalb der Displayanordnung 10 angeordnet sind. Es ist außerdem möglich, dass beide Stufen 36 und 38 derart ausgebildet sind, dass sie miteinander - ggf. zusammen mit weiteren Stufen - integriert sind und somit eine einzige Einheit bilden.

Das Wesentliche der vorliegenden Erfindung besteht in der Gestaltung der Displayanordnung 10. Daher ist die in Fig. 1 dargestellte Steuervorrichtung 30 nur beispielhaft. Es ist also jede Art von Steuervorrichtung möglich, wie sie bei elektronischen Lern-, Spiel-, Kommunikations- und/oder Prüfungsgeräten eingesetzt werden können. Deren Gestaltung sowie deren Funktionsweisen sind dem entsprechenden Fachmann bekannt, so dass hier nicht näher darauf eingegangen wird, als es für das Verständnis der vorliegenden Erfindung nötig ist.

Der Körper 12 hat bevorzugterweise eine pyramiden-ähnliche Form. Das heißt, dass die Seitenflächen 16 im unteren Bereich - also nahe der Grundfläche 26 - breiter sind als im oberen Bereich. Dort laufen die Seitenflächen 16 jedoch nicht spitz aufeinander zu, wie es bei Pyramiden üblich ist. Stattdessen ist die Deckfläche 20 vorgesehen, die das Betätigungselement 22 mit seinem zugehörigen Schalter aufnimmt und somit den Körper 12 in dessen oberen Bereich entsprechend abflacht. Es sei darauf hingewiesen, dass die hier vorgesehene Anzahl der Seitenflächen 16 dabei zwar bevorzugt, jedoch nur beispielhaft ist. Statt der sechs Seitenflächen 16 ist es auch möglich, den Körper 12 derart zu gestalten, dass eine andere Anzahl von Seitenflächen 16 vorgesehen ist. Dabei hat es sich besonders bewährt, dass maximal sechs - also auch fünf, vier oder drei der Seitenflächen 16 vorhanden sind, wobei das Ausführungsbeispiel mit drei Seitenflächen 16 nicht unter den Schutzumfang der Patentansprüche fällt.

Damit wird erreicht, dass die zugehörigen Nutzer nicht ohne Weiteres auf die Displays 14 ihrer Nachbarn schauen können.

Bei der bevorzugten Ausführungsform sind die Displays 14 fest mit dem Körper 12 verbunden. Diese Verbindung kann jedoch grundsätzlich auch lösbar sein, wie insbesondere für einen Service- bzw. Reparaturfall. Es ist weiterhin möglich, zumindest einzelne der fest verbauten Displays 14 durch eigenständige Geräte mit jeweils eigenem Display zu ersetzen bzw. zu ergänzen, wie insbesondere durch Smartphones, Tablet-Computer oder dergleichen. Darauf wird weiter unten noch näher eingegangen.

Die bevorzugte Displayanordnung 10 ermöglicht mittels der zugehörigen Steuervorrichtung 30 eine Vielfalt von Funktionen und Einsatzmöglichkeiten, die von einem Nutzer ausgewählt werden können. Darauf wird im Folgenden näher eingegangen.

In dem Systemspeicher 42 sind Daten gespeichert, die den Prozessor 40 derart ansteuern können, dass mindestens ein Betriebsmodus ausgewählt und durchgeführt werden kann. Bevorzugte Beispiele für derartige Betriebsmodi betrifft die Darstellung von Lehrinhalten bzw. von Prüfungsfragen. Dabei sind folgende Einsatzbereiche denkbar:
(a) in verschiedenen Schulformen für Schüler
(b) in Kindertagesstätten, Kindergärten oder dergleichen für Kinder
(c) in Pflegeeinrichtungen für Demenzkranke oder dergleichen
(d) bei betrieblichen Einstellungsverfahren oder Assessmentcentern für Bewerber
(e) im Bereich der Integrationshilfe für Flüchtlinge, Asylanten oder dergleichen
(f) in Bereichen der psychotherapeutischen Behandlung.

Dabei ist es auch möglich, eine digitale Karteikartensammlung zu verwenden, um beispielsweise Vokabeln oder andere Dinge zu lernen. Das erfolgt üblicherweise in einer Gruppe. Bevorzugterweise wird das Thema gemeinschaftlich ausgewählt und von den Nutzern bestätigt. Fragen oder Begriffe erscheinen auf allen Displays 14. (bzw. auf weiteren Anzeigegeräten wie unten erwähnt) gleichermaßen. Nach Beantwortung oder Herleitung der Antwort durch die Gruppe kann die Antwort an den Displays 14 für alle sichtbar angezeigt werden. Durch die gemeinsame Interaktion der Gruppenmitglieder kann der Lernerfolg erheblich gesteigert werden.

Um die Vorrichtung 5 in Betrieb zu nehmen, wird das Betätigungselement 22 gedrückt, wodurch der zugehörige Schalter (hier nicht gezeigt) betätigt wird. Bevorzugterweise wird unterschieden zwischen einem Einschalten aus einem Standby-Modus und einem echten Einschalten. Dabei ist es möglich, dass das Einschalten aus dem Standby-Modus durch kurzzeitiges Drücken des Betätigungselementes 22 erfolgt und für das echte Einschalten ein längeres Drücken - beispielsweise mehrere Sekunden - erforderlich ist. Durch mehrfaches Drücken des Elements 22 kann der gewünschte Betriebsmodus ausgewählt werden. Zusätzlich oder stattdessen ist es auch möglich, eine solche Modusauswahl durch Drücken der Navigationstasten 17 zu ermöglichen. Nutzer bzw. Teilnehmer, die an der zugehörigen Schulung, Prüfung oder dergleichen teilnehmen sollen, werden damit aufgefordert, sich in die Vorrichtung 5 einzuloggen und zwar derart, dass vor dem Display 14 der Seitenfläche mit der Ziffer "1" (s. Fig. 2; Bezugszeichen 21) ein erster Nutzer tätig wird und weitere Nutzer vor den Displays 14 der übrigen Seitenflächen "2",..., "6" tätig werden. Üblicherweise werden die Nutzer dafür eine Sitzposition einnehmen. Nachdem dies erfolgt ist, wird der ausgewählte Betriebsmodus gestartet. Die Navigationstasten 17 bzw. deren zugehörige Schalter werden betätigt, um zwischen unterschiedlichen Menüs auszuwählen, die zu dem ausgewählten Betriebsmodus gehören und die von den Displays 14 für die Nutzer dargestellt werden. Dabei ist beispielsweise Folgendes möglich:
- Im oberen Teil des Menüs wird eine Frage eingeblendet
- Nach bzw. während der Eingabe der zugehörigen Antwort durch den zugehörigen Nutzer wird seine Antwort innerhalb des Menüs auf dem Display 14 angezeigt, vor dem dieser Nutzer tätig ist. Eine solche Eingabe kann beispielsweise bei einem Multiple-Choice Test erfolgen durch Auswahl der geeigneten Antwort mittels der Navigationstasten, durch Eingabe per Touchscreen und/oder dergleichen. Sofern das Display 14 als Touchscreen gestaltet ist, sind natürlich auch andere Eingabemöglichkeiten denkbar, wie über eine Bildschirmtatstatur oder dergleichen. Dabei ist es in Abhängigkeit von dem ausgewählten Betriebsmodus möglich, dass (i) ein jeder Nutzer nur seine eigene Antwort auf seinem Display 14 sieht oder dass (ii) auch mehrere oder alle der anderen Nutzer diese Antwort sehen. Bevorzugterweise ist Modus (ii) derart gestaltet, dass innerhalb einer Gruppe von Nutzern jeder die Antwort bzw. Antworten der anderen sehen kann.

Wie bereits erwähnt, kann die Kommunikationsvorrichtung 5 in verschiedenen Betriebsmodi arbeiten und somit auch für unterschiedliche Einsatzbereiche verwendet werden. Im Folgenden wird auf einige wesentliche Vorteile und Eigenarten näher eingegangen, die sich auf die oben erwähnten Einsatzbereiche beziehen.

Bei einem Einsatz im Bereich von Schulen (Einsatzbereich a) wird eine unterrichtsbegleitende Vermittlung von Lerninhalten sowie deren Ergänzung bevorzugt. Das ist in allen Schulformen möglich und umfasst insbesondere folgende Punkte:

| **Thematischer Unterricht** | **Einsatzgebiet** |
|---|---|
| Deutschunterricht | themenbezogene Diskussionen |
| Fremdsprachenunterricht | effektives Vokabeltraining |
| | Grammatikübungen |
| | Freies Sprechen in der Gruppe |
| Mathematik | Kopfrechnen |
| | Formeln umstellen |

Damit ergeben sich insbesondere folgende Vorteile für die Schüler, die Lehrer und die Schulen:
- weniger Frontalunterricht (selbstbestimmtes Lernen)
- Förderung von Kommunikationsfähigkeit
- Gruppenarbeit (Teambildung durch gemeinsames Lernen)
- Freiwilliges Lernen - insbesondere aufgrund ansprechender neuer Medien
- Nachhaltigkeit des Lernerfolges durch Multimedia
- Kosteneinsparungen durch geringeren Personalbedarf
- Alternativunterricht bei Mangel von Lehrkräften und dadurch Kostenersparnis
- Überbrückung von Ausfallstunden mit sinnvoller Beschäftigung

Bei einem Einsatz im Bereich von Kindertagesstätten (b) ergeben sich insbesondere folgende Vorteile:
- Einfache und individuelle gemeinschaftliche Betreuung vieler Kinder und somit Entlastung der Mitarbeiter
- Verhältnismäßig geringer Personalbedarf bzw. Personalkosten
- Flexible Überbrückung bei Ausfall von Personal, wie beispielsweise bei Krankheit
- Stärkung der Geselligkeit und Ausdrucksfähigkeit
- Förderung der Kommunikationsfähigkeit in der Gruppe
- Migrationshilfe
- Früherkennung von Konzentrations- und/oder Sehschwächen
- Verbesserung oder Vermeidung von Lernschwierigkeiten, wie beispielsweise Rechtschreibschwächen (Legasthenie)
- Training und Förderung der kognitiven Fähigkeiten

Bei einem Einsatz im Bereich von Alten- und Pflegeeinrichtungen (c) ergeben sich insbesondere folgende Vorteile:
- Verbesserung der Demenzbetreuung
- sinnvolle Beschäftigung der zu pflegenden Personen
- Anregung zum kommunikativen Austausch

Bei einem Einsatz im Bereich von betrieblichen Einstellungsverfahren bzw. Assessmentcentern (d) können insbesondere folgende Punkte überprüft bzw. abgeschätzt werden:
- Kommunikationsfähigkeit
- Verhaltensauffälligkeiten
- Selbstständigkeit
- Gruppenverhalten
- Teamfähigkeit
- Rollenverteilung in der Gruppe

Dabei ist eine individuelle Anpassung der Inhalte an betriebsspezifische Themen und Arbeitsbereiche möglich.

Bei einem Einsatz im Bereich der Integrationshilfe für Flüchtlinge, Asylanten oder dergleichen (e) sind insbesondere folgende Möglichkeiten gegeben:
- Sprachliche Grundlagenvermittlung
- Vokabeltraining
- Günstige Sprachkurse für eine Vielzahl von Personen
- Steigerung des Lernerfolgs durch gemeinschaftliches Lernen, gegenseitigen Austausch und Spaß
- Vermittlung von kulturell wichtigen Dingen und gesellschaftlichen Wertevorstellungen unseres Landes
- Vorbereitung auf Sprachtests

Bei einem Einsatz im Bereich einer psychotherapeutischen Behandlung (f) ergeben sich insbesondere folgende Möglichkeiten:
- Einsatz bei einer Vorstufe, also bevor eine richtige Therapie erforderlich wird
- Reduzierung von therapeutischem Fachpersonal
- Freier Austausch mit Gleichgesinnten

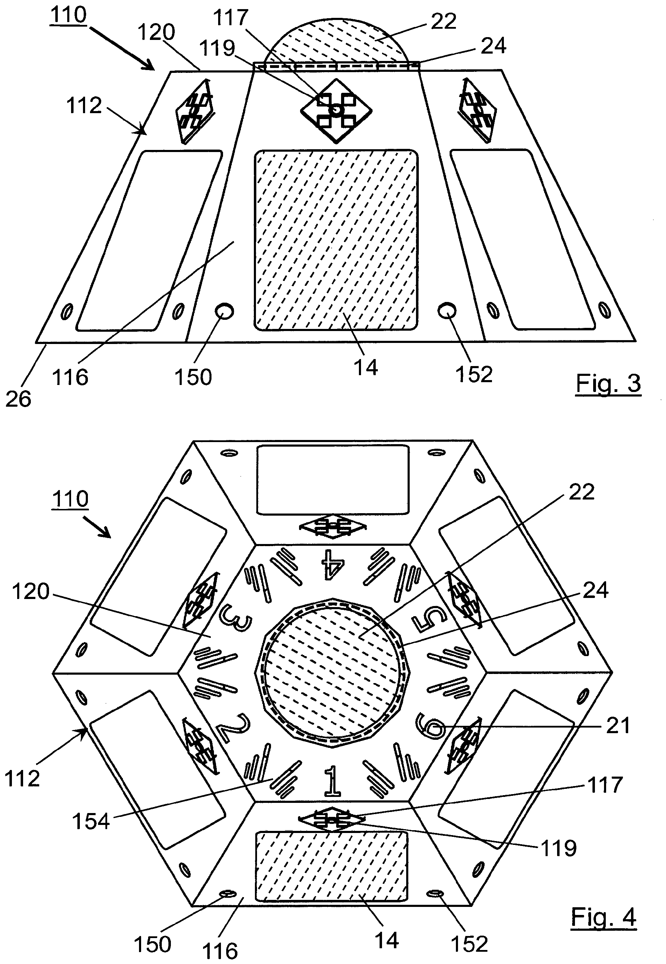

In Fig. 3 und 4 ist eine vorteilhafte Weiterbildung der Displayanordnung in Seitenansicht bzw. Draufsicht dargestellt, die hier mit 110 bezeichnet ist. Der Übersichtlichkeit halber sind hier nur solche Elemente dargestellt, die für das Verständnis der Erfindung sinnvoll sind. Andere Elemente, wie beispielsweise die Befestigungsbohrungen 28, die Öffnungen 29 und die Kanten 18 sind nicht dargestellt bzw. nicht mit Referenzzeichen versehen.

Die Displayanordnung 110 weist sechs Seitenflächen 116 auf, die sich von den zuvor beschriebenen Seitenflächen 16 im Wesentlichen folgendermaßen unterscheiden:
- es sind hier vier Navigationstasten 117 und auch eine Bestätigungs- bzw. Entertaste 119 vorgesehen
- es sind zwei Leitungsdurchführungen 150, 152 vorgesehen, durch die Leitungen (hier nicht gezeigt) verlaufen können, die für die Stromversorgung bzw.

Steuerung mittels externer Geräten dienen. Diese Leitungen sind also weiterhin verbunden mit der elektrischen Leitung 32 bzw. mit der Signalleitung 34.

Außerdem sind in der Deckfläche 120 Lüftungsschlitze 154 vorgesehen. Die übrigen auf der Deckfläche 120 vorgesehenen Elemente 21, 22 und 24 sind bevorzugterweise gleich bzw. sehr ähnlich wie in dem Ausführungsbeispiel aus Fig. 1 und 2 und daher auch mit gleichen Referenzen versehen.

Durch die Entertaste 119 wird ermöglicht, dass die Auswahl von Menüs, Betriebsmodi und/oder vordefinierten Antworten (Multiple-Choice), was üblicherweise durch die Navigationstasten 117 erfolgt, bestätigt werden kann bzw. muss. Erst danach wird die Vorrichtung 5 die von dem Nutzer getätigte Auswahl verarbeiten.

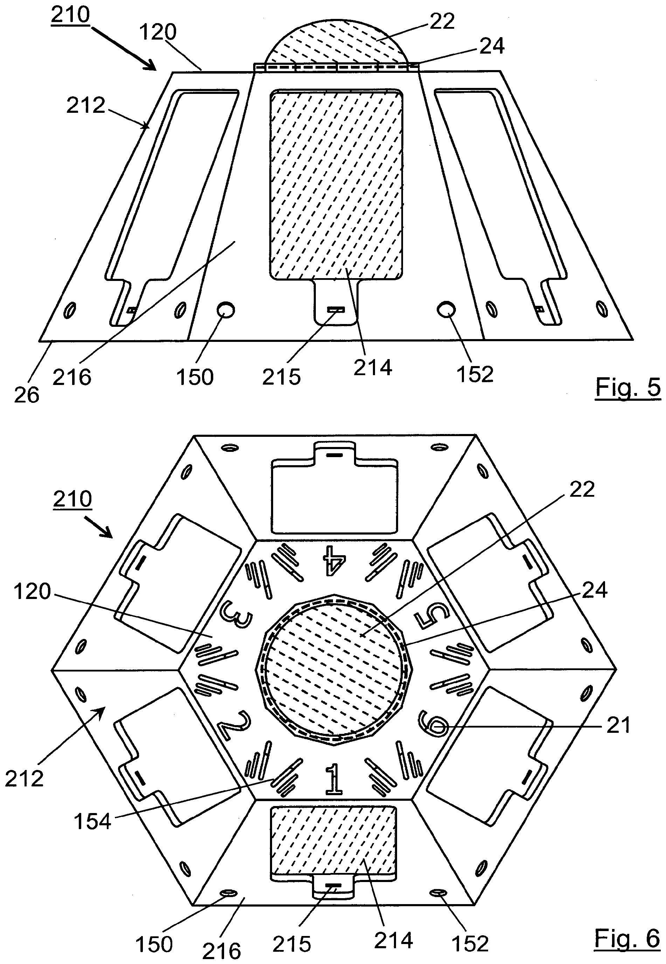

Wie bereits erwähnt, können statt der fest verbauten Displays 14 auch Smartphones - oder ähnliche Geräte mit einer eigenen Anzeige - für die Kommunikationsvorrichtung 5 verwendet werden. Derartige Geräte sind üblicherweise nicht fest mit dem Körper verbunden, sondern werden stattdessen nur für die Zeit der Verwendung zusammen mit der Kommunikationsvorrichtung 5 mit dieser elektrisch und/oder mechanisch verbunden. Eine dafür besonders geeignete Ausführung ist in den Fig. 5 und 6 dargestellt.

Der in Fig. 5, 6 gezeigte Körper 212 ist grundsätzlich gleichartig gestaltet wie der zuvor beschriebene Körper 112 in den Fig. 3, 4. Jedoch gibt es hier folgende Unterschiede:
- der Körper 212 weist an den Seitenflächen 216 bevorzugterweise vertiefte Aussparungen dort auf, wo die Smartphones gelegt bzw. platziert werden sollen. Eines dieser Smartphones ist in Fig. 5, 6 dargestellt und mit der Referenz 214 versehen. Unterhalb der Aussparungen befindet sich jeweils noch eine Griffmulde, damit die Smartphones 214 auf einfache Weise in die Aussparungen abgelegt bzw. von dort wieder entnommen werden können.
- Es ist weiterhin möglich, dass zusätzlich oder statt solcher Aussparungen an den Seitenflächen 216 vorstehende Flächen, wie beispielsweise auch Haken oder ähnlich, vorgesehen sind, auf die die verwendeten Smartphones 214 gelegt bzw. gestellt werden können.
- An den Unterkanten der genannten Aussparungen bzw. im Bereich der vorstehenden Flächen können Mittel vorgesehen sein, durch die die Smartphones 214 mit der Vorrichtung 5 elektrisch verbunden werden können. Dadurch können die Smartphones 214 mit Strom versorgt und/oder sonstwie elektrisch angeschlossen werden - und zwar zusätzlich zu oder statt durch die oben genannten Leitungen, die durch die Leitungsdurchführungen 150, 152 geführt werden können. Durch die genannten Mittel kann somit eine Verbindung zu der elektrischen Leitung 32 und/oder zu der Signalleitung 34 ermöglicht werden. Eine solche Möglichkeit bietet beispielsweise ein USB-Anschluss innerhalb der Griffmulden, der in Fig. 5, 6 durch das Feld 215 angedeutet ist. Ein solcher Anschluss ermöglicht auch die Verbindung zu weiteren Mitteln, wie eine Eingabetastatur, eine Computermaus und/oder dergleichen. Dadurch können Eingaben in die Vorrichtung 5 bzw. in die daran angeschlossenen Smartphones 214 erleichtert werden.

Durch die Verbindung eines solchen Smartphones 214 (das beispielsweise an der Seitenfläche "1" platziert wird) mit der elektrischen Leitung 32 - und damit mit der elektrischen Stromversorgung 36 - besteht die Möglichkeit, den Akkumulator dieses Smartphones 214 zu laden. Es ist durchaus möglich, dass dies für den einen oder anderen Nutzer der einzige Grund ist, sein Smartphone an die Vorrichtung 5 anzuschließen. Über die Signalleitung 34 und die Steuereinheit 38 kann jedoch außerdem eine Verbindung zu anderen Smartphones 214 (an den übrigen Seitenflächen) bzw. zu weiteren Geräten ermöglicht werden, wodurch eine beliebige Kommunikation stattfinden kann. Dadurch ist es möglich, dass die verwendeten Smartphones 214 bzw. deren Displays lediglich die zuvor beschriebenen Displays 14 ersetzen und somit die oben erwähnten Betriebsmodi realisiert werden. Es sind bei der Smartphone-Version jedoch auch weitere Betriebsmodi mittels der Steuervorrichtung 30 möglich. Bei der bevorzugten Ausführungsform ist dies jedoch erst dann möglich, wenn der Nutzer das zuvor über eine geeignete Eingabe auf seinem Smartphone 214 und/oder an der Vorrichtung 5 freigegeben hat.

So ist ergänzend eine Applikation (App) vorgesehen, durch die bei entsprechender Installation auf den vorhandenen Smartphones 214 vielfältige Möglichkeiten zur Nutzung der Vorrichtung 5 bestehen, wie beispielsweise mit anderen Teilnehmern über auswählbare Themen ins Gespräch zu kommen oder Informationen auszutauschen, wie beispielsweise Kontaktdaten in Form von digitalen Visitenkarten, Bilder, Videos oder ähnliches. Dadurch besteht auch die Möglichkeit, auf diese Anwendung abgestimmte Gesellschafts- und Unterhaltungsspiele anzubieten. Die Ziffern 21, die auch beleuchtet sein können, ermöglichen eine einfache und zielgerichtete Kommunikation zwischen den Nutzern der Smartphones. Es ist sinnvoll, dass bei erstmaliger Nutzung der Vorrichtung 5 durch eines der Smartphones 214 der Nutzer auf das Herunterladen und die Installation der zugehörigen Applikation (App) hingewiesen wird. Das erfolgt bevorzugterweise durch Verweis auf eine entsprechende Internetseite oder direkt über die Kommunikationsvorrichtung 5.

Durch die beschriebene Smartphone-Version können außerdem auch folgende Anwendungen ermöglicht bzw. Vorteile erzielt werden:
- Bei Einsatz in Schulungs- bzw. Seminarräumen:
   ∘ Möglichkeit der Ladung des Smartphone-Akkumulators
   ∘ Förderung der Geselligkeit (Gesellschaftsspiele)
   ∘ Training der Kommunikationsfähigkeit
   ∘ Kontaktaufnahme mit fremden Personen
   ∘ Austausch von Kontaktdaten (Visitenkarte,...) über App
   ∘ Auswahl unterschiedlicher / individueller Gesprächsthemen
- Bei Einsatz im Gastronomiebereich:
   ∘ Möglichkeit der Ladung des Smartphone-Akkumulators in der Öffentlichkeit
   ∘ Förderung der Geselligkeit
   ∘ Training der Kommunikationsfähigkeit
   ∘ Kontaktaufnahme mit fremden Personen
   ∘ Austausch von Kontaktdaten (Visitenkarte,...) über eine Applikation (App)
   ∘ Auswahl unterschiedlicher / individueller Gesprächsthemen
   ∘ Umsatzsteigerung durch mehr Kundschaft
   ∘ Gesellschaftliche Integration
- Bei Einsatz in Hotelbars:
   ∘ Möglichkeit der Ladung des Smartphone-Akkumulators in der Öffentlichkeit
   ∘ Förderung der Geselligkeit
   ∘ Training der Kommunikationsfähigkeit
   ∘ Kontaktaufnahme mit fremden Personen
   ∘ Austausch von Kontaktdaten (Visitenkarte,...) über App
   ∘ Auswahl unterschiedlicher / individueller Gesprächsthemen

Bei einer weiteren Ausführungsform ist der Körper 12 bzw. 212 derart gestaltet, dass zumindest einzelne der Displays 14 ersetzt werden durch einen Tablet-Computer bzw. dessen Display. In einem solchen Fall ist zunächst die Größe des Körpers 12 bzw. 212 entsprechend anzupassen. Der Tablet-Computer kann, ähnlich wie auch bei der Smartphone-Version bereits beschrieben, in Aussparungen platziert werden. Es ist weiterhin möglich, dass zusätzlich oder statt solcher Aussparungen an den Seitenflächen 16 bzw. 216 vorstehende Flächen, wie beispielsweise auch Haken oder ähnlich, vorgesehen sind, auf die die verwendeten Tablet-Computer gestellt werden können. Auch bei der Tablet-Version sind bevorzugterweise Verbindungen zu den Leitungen 32, 34 vorgesehen. Diese können zumindest teilweise drahtgebunden bzw. drahtlos sein. Ergänzend wird auf die Beschreibung zu der Smartphone-Version (Fig. 3, 4) verwiesen.

Bei weiteren Ausführungsformen ist es möglich, dass zumindest einzelne der Seitenflächen 16, 116 bzw. 216 sowohl ein Display 14 als auch einen Anschluss für ein Smartphone und/oder einen Tablet-Computer aufweisen. In solchen Fällen ist es vorteilhaft, wenn bei Anschluss eines Smartphones 214 bzw. eines Tablet-Computers an eine der Seitenflächen 16, 116, 216 das zugehörige Display 14 durch die Ansteueranordnung 30 ausgeschaltet wird.

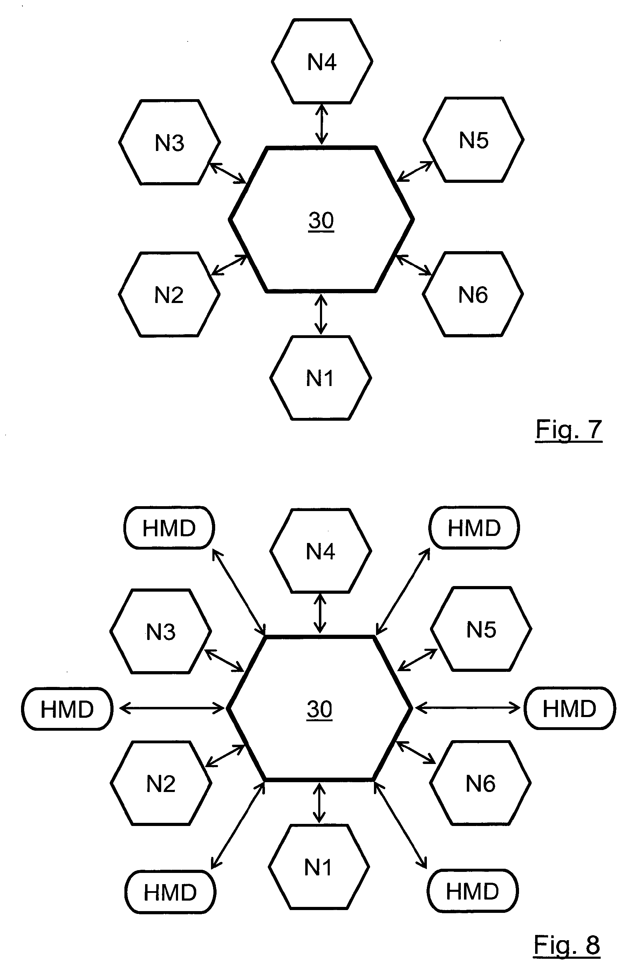

Bei den bisherigen Kommunikationsvorrichtungen 5 mit den Displayanordnungen 10, 110, 210 wird - wie erwähnt - davon ausgegangen, dass eine Vielzahl von Anzeigeelementen 14, Smartphones 214, Tablet-Computern und/oder dergleichen zur Wiedergabe und/oder zur Eingabe von Daten verwendet wird. Diese Geräte sind mechanisch verbunden mit dem Körper 12, 112 bzw. 212 und die eingegeben bzw. auszugebenden Daten werden verarbeitet durch die zugehörige Steuervorrichtung 30. Jedes der genannten Geräte (14, 214 bzw. Tablet-Computer) ist üblicherweise einem Nutzer zugeordnet. Bei einer Kommunikationsvorrichtung 5 mit sechs solcher Geräte bzw. Nutzer ergibt sich eine mögliche Kommunikation zwischen diesen Nutzern N1,..., N6, wie sie in Fig. 7 dargestellt ist. Dabei zeigt jeder der Pfeile symbolisch einen bidirektionalen Kommunikationsweg, der zumindest teilweise drahtgebunden und/oder zumindest teilweise drahtlos realisiert werden kann.

Bei einer Weiterentwicklung der bisher beschriebenen Ausführungsbeispiele wird die Kommunikationsvorrichtung 5 bzw. die zugehörige Steuervorrichtung 30 mit einer Vielzahl von weiteren Anzeigevorrichtungen drahtgebunden und/oder drahtlos verbunden, die bevorzugterweise als Videobrille bzw. Helmdisplay gestaltet sind und im Folgenden allgemein als Head-Mounted Display (HMD) bezeichnet werden.

Fig. 8 stellt symbolisch ein Kommunikationssystem dar, das sich bei einer entsprechenden Erweiterung mit einer Vielzahl von Head-Mounted-Displays HMD ergibt. Dabei ist es möglich, dass zumindest einzelne der angeschlossenen Head-Mounted-Displays mit Mitteln zur Audiowiedergabe, wie Kopfhörern oder dergleichen, ausgestattet sind. Damit können sowohl Video- als auch Audiosignale an den zugehörigen Nutzer abgegeben werden. Diese können von den Nutzern N1,...,N6 und/oder von anderen Personen benutzt werden. Das hängt von der jeweiligen Anwendung, also von der Programmierung und Ansteuerung der Steuervorrichtung 30 ab. Dabei ist es weiterhin möglich, dass alle Head-Mounted Displays HMD gleichartig angesteuert werden. Es ist jedoch auch möglich, dass zumindest einzelne davon unterschiedlich im Vergleich zu anderen angesteuert werden.

Die Kommunikationsvorrichtung 5 kann außerdem mit einem KommunikationsModul ausgestattet sein, das eine drahtgebundene und/oder eine drahtlose Kommunikation mit externen Kommunikationsnetzen ermöglicht. Diese können sich in Reichweite befinden, wie beispielsweise in zugehörigen Gaststätten, Bars, Cafes, Versammlungsräumen oder dergleichen. Es ist jedoch auch eine Kommunikation mit weiter entfernten Netzen möglich, wie beispielsweise über eine Internetverbindung. Dadurch können beispielsweise Bild- oder Videoinformationen empfangen und diese an die angeschlossenen Anzeigegeräte (14, 214, Tablet-Computer, HMD) weitergeleitet werden. Weiterhin ist auch ein Support, ein Update oder dergleichen möglich. Außerdem ist es auch möglich, die Vorrichtung 5 als Accesspoint zu verwenden, wodurch eine Signalverstärkung zur Vergrößerung der Reichweite ermöglicht wird.

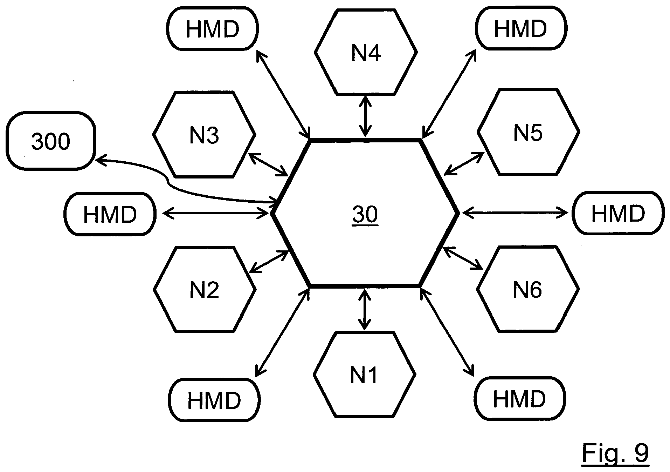

Fig. 9 zeigt symbolisch ein Kommunikationssystem, das ausgehend von Fig. 8 um die Anbindung an eine externe Einheit 300, wie eine Konsole, eine Internetverbindung oder dergleichen, erweitert ist. Hierbei kann die Steuervorrichtung 30 zusätzliche Informationen und Daten von einer externen Recheneinheit erhalten und diese an die Anzeigegeräte weiterleiten. Weiterhin ist auch die Einbindung zusätzlicher Bedienelemente möglich.

Es sei darauf hingewiesen, dass die beschriebenen Ausführungsbeispiele zwar bevorzugt sind, jedoch vorteilhafte Abwandlungen möglich sind. Dazu gehören beispielsweise:
- Die Kommunikationsvorrichtung 5 kann derart ausgebildet sein, dass Informationen auf den Displays 14 bzw. Smartphones 214 oder Tablet-Computern dargestellt werden, die unabhängig von dem ausgewählten Betriebsmodus sind. Das kann beispielsweise kommerzielle Werbung sein. Diese oder andere solcher Informationen können während des Normalbetriebs der Kommunikationsvorrichtung 5 eingeblendet werden, während deren Standby-Betriebs oder bei sonstiger passender Gelegenheit.
- Die Auswahl von Menüs kann - wie oben beschrieben - über die Navigationstasten 17 bzw. 117 erfolgen. Zusätzlich oder stattdessen ist es auch möglich, dafür Displays 14 bzw. Smartphones 214, Tablet-Computer oder dergleichen zu verwenden, die Eingaben ermöglichen und durch die Steuereinheit 38 entsprechend angesteuert werden. Für eine solche Eingabemöglichkeit sind insbesondere Touchscreens und/oder entsprechende Schaltmittel geeignet.
- Ähnliches gilt auch für die Bestätigungstaste 119, die ebenfalls ergänzt oder ersetzt werden kann über Eingaben über die Displays 14 bzw. über die Smartphones 214 oder dergleichen.
- Die aufladbare Batterie der Stromversorgung 36 kann sich unterhalb einer Platte befinden, auf der der Körper 12 montiert ist. Damit ist es möglich, diese Batterie auf einfache Weise zu wechseln bzw. zu laden.
- Insbesondere bei den Ausführungen, die für die Verwendung von Smartphones oder Tablet-Computern vorgesehen sind, ist eine Diebstahlsicherung sehr sinnvoll. Diese wird bevorzugterweise realisiert, indem linear verstellbare Haken, die seitlich oder von oben auf das Smartphone bzw. den Tablet-Computer geschoben werden und an die jeweilige Materialstärke angepasst werden können. Eine passende Arretierung lässt sich bevorzugterweise über einen Schließzylinder lösen, um das Smartphone bzw. den Tablet-Computer entnehmen zu können.
- Zumindest einzelne der Betätigungselemente 17, 117, 118, 22 können derart ausgebildet sein, dass sie berührungsempfindlich sind - beispielsweise resistiv und/oder kapazitativ - und dass eine Schaltfunktion mittels der Steuereinheit 38 ermöglicht wird.
- Die elektrischen bzw. elektronischen Verbindungen zur Stromversorgung und/oder Steuerung zwischen der Kommunikationsvorrichtung 5 und den Displays 14 bzw. den Smartphones 214 (oder ähnlichen Geräten) kann grundsätzlich drahtgebunden erfolgen. Zusätzlich oder stattdessen ist es auch möglich, derartige Verbindungen zumindest teilweise drahtlos zu realisieren, wie beispielsweise mittels Induktion, WLAN, Bluetooth, optisch und/oder dergleichen.
- Die Öffnungen 29 können zumindest teilweise ersetzt werden durch Steckverbindungen, über die eine Stromversorgung und/oder eine Ansteuerung ermöglicht wird. Weiterhin ist es möglich, dass darüber auch Updates der Vorrichtung 5 und/oder der daran angeschlossenen Geräte 14 bzw. 214 erfolgen können.
- Verbindungen zu der Steuervorrichtung 30 und/oder zu den Anzeigeelementen 14, Smartphones 214 bzw. Tablet-Computern kann auch mittels eines magnetischen Adapters erfolgen, über den ein elektrisches Kabel angeschlossen werden kann (s.a. www.znaps.net).
- Die Steuervorrichtung 30 kann auch besondere Mittel zur Bildwiedergabe (wie Grafikkarte) und/oder zur Audiowiedergabe (wie Soundkarte) enthalten.
- Die Ansteuerung der Anzeigeelemente 14, der Smartphones 214 bzw. der Tablet-Computer, der Head-Mounted-Displays HMD und/oder von anderen Wiedergabegeräten, wie Mitteln zur Darstellung von holografischen Bildern - und damit die von ihnen durchgeführte Wiedergabe von Video- und/oder ggf. auch Audiosignalen - kann von verschiedenen Daten abhängig sein, wie beispielsweise von
   ∘ Daten, die in einem der Speicher 42, 44 abgelegt sind,
   ∘ von Algorithmen, die durch den Prozessor 40 bestimmt werden,
   ∘ von Eingaben über die Smartphones 214 bzw. Tablet-Computer,
   ∘ von Daten in Speichern der Smartphones 214 bzw. der Tablet-Computer vorhanden sind,
   ∘ von Signalen, die von außerhalb über die Einheit 300 empfangen werden,
   ∘ von Signalen, die über nicht dargestellte Sensoren erfasst werden, wie insbesondere solchen zur Gestensteuerung,
   ∘ von Signalen, die durch einen Datenhandschuh erzeugt werden
   ∘ und/oder dergleichen.
- Die Ansteuerung der Anzeigeelemente 14, der Smartphones 214 bzw. der Tablet-Computer und/oder der Head-Mounted-Displays HMD kann derart erfolgen, dass zu vorgegebenen Zeiten vorgegebene Bilder, Videos und/oder Töne, wie beispielsweise für Werbung, wiedergegeben werden.

### Bezugszeichenliste

- 5: Kommunikationsvorrichtung
- 10, 110, 210: Displayanordnung
- 12, 112, 212: Körper
- 14: Anzeigenelemente, Displays
- 16, 116: Seitenflächen
- 17, 117: Navigationstasten
- 18: Kanten
- 20, 120: Deckfläche
- 21: Ziffern "1",..., "6"
- 22: Betätigungselement für Druckschalter
- 24: Schraubverbindung
- 26: Grundfläche
- 28: Befestigungsbohrungen
- 29: Öffnungen
- 30: Steuervorrichtung
- 32: elektrische Leitung
- 34: Signalleitung
- 36: elektrische Stromversorgung
- 38: Steuereinheit
- 40: Prozessor
- 42: Systemspeicher
- 44: Arbeitsspeicher
- 119: Entertaste
- 150, 152: Leitungsdurchführungen
- 154: Lüftungsschlitze
- 214: Smartphone (oder ähnlich)
- 215: USB-Anschluss
- 300: externe Einheit
- N1,...,N6: Nutzer
- HMD: Head-Mounted-Display

## Patentansprüche

1. Kommunikationsvorrichtung (5) mit einer Displayanordnung (10; 110; 210) und einer Steuervorrichtung (30) zur Durchführung von mindestens einem Betriebsmodus, wobei die Displayanordnung (10; 110; 210) einen pyramidenähnlichen Körper (12; 112; 212) aufweist mit einer Grundfläche (26), einer Deckfläche (20; 120) sowie einer Vielzahl von Seitenflächen (16; 116; 216), wobei mindestens vier und maximal sechs Seitenflächen (16; 116; 216) vorgesehen sind und mindestens vier davon jeweils Mittel zur Aufnahme eines Anzeigegerätes (14; 214) aufweisen, wobei die Steuervorrichtung (30) vollständig innerhalb des Körpers (12; 112; 212) der Displayanordnung (10; 110; 210) angeordnet ist und wobei die Steuervorrichtung (30) über eine zweite Verbindung (34), die drahtgebunden und/oder drahtlos ausgebildet ist, die Displayanordnung (10; 110; 210) und die jeweils aufgenommenen Anzeigegeräte (14; 214) im Normalbetrieb ansteuert und so vorgegebene Betriebsmodi schalten kann, und damit, je nach Betriebsmodus, eine Kommunikation zwischen den Anzeigegeräten (14; 214) ermöglicht.

2. Kommunikationsvorrichtung (5) nach Anspruch 1, **dadurch gekennzeichnet, dass** die Steuervorrichtung (30) über eine erste Verbindung (32), die drahtgebunden und/oder drahtlos ausgebildet ist, die Displayanordnung (10; 110; 210) und/oder die Anzeigegeräte (14; 214) im Normalbetrieb mit elektrischer Energie versorgt.

3. Kommunikationsvorrichtung (5) nach Anspruch 2, **dadurch gekennzeichnet, dass** eine weitere Verbindung vorgesehen ist, über die eine aufladbare Batterie geladen werden kann, die mit der Steuervorrichtung (30) verbunden ist.

4. Kommunikationsvorrichtung (5) nach einem der Ansprüche 2 oder 3, **dadurch gekennzeichnet, dass** die erste Verbindung (32) und/oder die weitere Verbindung zumindest teilweise drahtgebunden ausgebildet ist und eine Steckverbindung mit einem magnetischen Adapter aufweist.

5. Kommunikationsvorrichtung (5) nach einem der vorigen Ansprüche, **dadurch gekennzeichnet, dass** die zweite Verbindung (34) derart gestaltet ist, dass sie außerdem die Displayanordnung (10; 110; 210) und/oder die Anzeigegeräte (14; 214) im Normalbetrieb mit elektrischer Energie versorgt.

6. Kommunikationsvorrichtung (5) nach einem der vorigen Ansprüche, **dadurch gekennzeichnet, dass** die zweite Verbindung (34) zumindest teilweise drahtgebunden ausgebildet ist und eine Steckverbindung mit einem magnetischen Adapter aufweist.

7. Kommunikationsvorrichtung (5) nach einem der vorigen Ansprüche, **dadurch gekennzeichnet, dass** innerhalb und/oder außerhalb des Körpers (12; 112; 212) Audio-Wiedergabemittel vorgesehen sind.

8. Kommunikationsvorrichtung (5) nach einem der vorigen Ansprüche, **dadurch gekennzeichnet, dass** die Deckfläche (20; 120) ein erstes Schaltmittel (22) aufweist, über das die Kommunikationsvorrichtung (5) ein- und/oder ausgeschaltet werden kann.

9. Kommunikationsvorrichtung (5) nach einem der vorigen Ansprüche, **dadurch gekennzeichnet, dass** zumindest einzelne der Seitenflächen (16; 116) ein zweites Schaltmittel (17; 117) aufweisen, über das gewünschte Betriebsmodi vorgegeben werden können.

10. Kommunikationsvorrichtung (5) nach einem der vorigen Ansprüche, **dadurch gekennzeichnet, dass** zumindest einzelne der Seitenflächen (16; 116) ein drittes Schaltmittel (119) aufweisen, das als Eingabetaste dient.

11. Kommunikationsvorrichtung (5) nach einem der vorigen Ansprüche, **dadurch gekennzeichnet, dass** zumindest einzelne der Seitenflächen (16; 116) mindestens eine Leitungsdurchführung (150; 152) aufweisen.

12. Kommunikationsvorrichtung (5) nach einem der vorigen Ansprüche, **dadurch gekennzeichnet, dass** zumindest einzelne der Seitenflächen (16; 116) eine Anschlussbuchse (215) aufweisen, über die mindestens eines der Anzeigegeräte (14; 214) mit der Steuervorrichtung (30) und/oder mit weiteren Geräten (300; HMD) verbunden werden kann.

13. Kommunikationsvorrichtung (5) nach einem der vorigen Ansprüche, **dadurch gekennzeichnet, dass** ein Modul vorhanden ist, über das eine drahtlose und/oder drahtgebundene Kommunikation zwischen
- der Steuervorrichtung (30) bzw. den Anzeigegeräten (14; 214) und
- weiteren Geräten (300; HMD)
möglich ist.

14. Kommunikationsvorrichtung (5) nach einem der vorigen Ansprüche, **dadurch gekennzeichnet, dass** zumindest einzelne Teile davon durch Formpressen und/oder mittels 3D-Druck hergestellt sind.

15. Kommunikationsvorrichtung (5) nach einem der vorigen Ansprüche, **dadurch gekennzeichnet, dass** mindestens ein Head-Mounted-Display (HMD) vorgesehen ist, das mit der Steuervorrichtung (30) verbunden ist und von dieser mit Videosignalen und/oder Audiosignalen angesteuert wird.

16. Kommunikationsvorrichtung (5) nach Anspruch 15, **dadurch gekennzeichnet, dass** die Videosignale derart ausgebildet sind, dass sie die Wiedergabe von 3-dimensionalen Bildern für eine Virtual-Reality (VR) Anwendung, eine Augmented-Reality (AR) Anwendung und/oder eine Mixed-Reality (MR) Anwendung ermöglichen.

17. Kommunikationsvorrichtung (5) nach einem der Ansprüche 15 oder 16, **dadurch gekennzeichnet, dass** Mittel zur Messung der Position, Lage und/oder Bewegung des mindestens einen Head-Mounted-Displays (HDM) vorhanden sind und die von diesen Mitteln abgegebenen Sensorsignale der Steuervorrichtung (30) zugeführt werden.

18. Kommunikationsvorrichtung (5) nach einem der Ansprüche 15-17, **dadurch gekennzeichnet, dass**
• zumindest einzelne der Anzeigegeräte (14; 214) mit Eingabemitteln ausgestattet sind,
• die Steuervorrichtung (30) Signale empfängt, deren Wert abhängig ist von Eingaben über die genannten Eingabemittel der Anzeigegeräte (14; 214) und dass
• die Steuervorrichtung (30) in Abhängigkeit dieser Werte Videosignale und/oder Audiosignale erzeugt und diese an mindestens eines der Head-Mounted-Displays (HMD) abgibt.

19. Kommunikationsvorrichtung (5) nach einem der vorigen Ansprüche, **dadurch gekennzeichnet, dass** die Ansteuerung der Anzeigegeräte (14, 214), der gegebenenfalls vorhandenen Head-Mounted-Displays (HMD) und/oder von sonstigen Wiedergabegeräten abhängig ist von
∘ Daten, die in einem Speicher (42, 44) innerhalb der Steuervorrichtung (30) abgelegt sind,
∘ von Algorithmen, die durch einen Prozessor (40) bearbeitet werden,
∘ von Eingaben über Eingabemittel der Displayanordnung (10; 110; 210)
∘ von Eingaben über Eingabemittel der Anzeigegeräte (14; 214),
∘ von Daten in Speichern der Anzeigegeräte (14; 214),
∘ von Signalen, die von außerhalb über eine Einheit (300) empfangen werden,
∘ von Signalen, die über Sensoren zur Gestensteuerung erfasst werden,
∘ und/oder von Signalen, die durch einen Datenhandschuh erzeugt werden.

20. Kommunikationsvorrichtung (5) nach einem der vorigen Ansprüche, **dadurch gekennzeichnet, dass** die Ansteuerung der Anzeigegeräte (14; 214) und/oder der gegebenenfalls vorhandenen Head-Mounted-Displays (HMD) derart erfolgt, dass zu vorgegebenen Zeiten bestimmte Bilder, Videos und/oder Töne wiedergegeben werden.

21. Kommunikationsvorrichtung (5) nach einem der vorigen Ansprüche, **dadurch gekennzeichnet, dass** die Steuervorrichtung (30) derart ausgebildet ist, dass von außen ein Steuerungsprogramm (App) geladen werden kann und dieses einen gewünschten Betriebsmodus ermöglicht.

## Claims

1. Communication apparatus (5) having a display arrangement (10; 110; 210) and a control apparatus (30) for performing at least one mode of operation, wherein the display arrangement (10; 110; 210) has a pyramid-like body (12; 112; 212) having a base area (26), a top area (20; 120) and a multiplicity of side areas (16; 116; 216), wherein at least four and no more than six side areas (16; 116; 216) are provided and at least four of these each have means for holding a display unit (14; 214), wherein the control apparatus (30) is arranged completely inside the body (12; 112; 212) of the display arrangement (10; 110; 210) and wherein the control apparatus (30) uses a second connection (34), which is in wired and/or wireless form, to actuate the display arrangement (10; 110; 210) and the respectively held display units (14; 214) in the normal mode and can thus switch prescribed modes of operation, and hence, depending on the mode of operation, allows a communication between the display units (14; 214).

2. Communication apparatus (5) according to Claim 1, **characterized in that** the control apparatus (30) uses a first connection (32), which is in wired and/or wireless form, to supply the display arrangement (10; 110; 210) and/or the display units (14; 214) with electrical energy in the normal mode.

3. Communication apparatus (5) according to Claim 2, **characterized in that** a further connection is provided, by means of which a rechargeable battery connected to the control apparatus (30) can be charged.

4. Communication apparatus (5) according to either of Claims 2 and 3, **characterized in that** the first connection (32) and/or the further connection is in at least partly wired form and has a plug connection having a magnetic adapter.

5. Communication apparatus (5) according to one of the preceding claims, **characterized in that** the second connection (34) is configured such that it additionally supplies the display arrangement (10; 110; 210) and/or the display units (14; 214) with electrical energy in the normal mode.

6. Communication apparatus (5) according to one of the preceding claims, **characterized in that** the second connection (34) is in at least partly wired form and has a plug connection having a magnetic adapter.

7. Communication apparatus (5) according to one of the preceding claims, **characterized in that** audio reproduction means are provided inside and/or outside the body (12; 112; 212).

8. Communication apparatus (5) according to one of the preceding claims, **characterized in that** the top area (20; 120) has a first switching means (22) by means of which the communication apparatus (5) can be switched on and/or off.

9. Communication apparatus (5) according to one of the preceding claims, **characterized in that** at least individual instances of the side areas (16; 116) have a second switching means (17; 117) by means of which desired modes of operation can be prescribed.

10. Communication apparatus (5) according to one of the preceding claims, **characterized in that** at least individual instances of the side areas (16; 116) have a third switching means (119) that serves as an input key.

11. Communication apparatus (5) according to one of the preceding claims, **characterized in that** at least individual instances of the side areas (16; 116) have at least one cable bushing (150; 152).

12. Communication apparatus (5) according to one of the preceding claims, **characterized in that** at least individual instances of the side areas (16; 116) have a connection socket (215) by means of which at least one of the display units (14; 214) can be connected to the control apparatus (30) and/or to further devices (300; HMD).

13. Communication apparatus (5) according to one of the preceding claims, **characterized in that** a module is present by means of which a wireless and/or wired communication between
- the control apparatus (30) or the display units (14; 214) and
- further devices (300; HMD)
is possible.

14. Communication apparatus (5) according to one of the preceding claims, **characterized in that** at least individual parts thereof are manufactured by compression moulding and/or by means of 3D printing.

15. Communication apparatus (5) according to one of the preceding claims, **characterized in that** at least one head mounted display (HMD) is provided that is connected to the control apparatus (30) and is actuated by the latter by means of video signals and/or audio signals.

16. Communication apparatus (5) according to Claim 15, **characterized in that** the video signals are in a form such that they allow the reproduction of three-dimensional images for a virtual reality (VR) application, an augmented reality (AR) application and/or a mixed reality (MR) application.

17. Communication apparatus (5) according to either of Claims 15 and 16, **characterized in that** means for measuring the position, orientation and/or movement of the at least one head mounted display (HDM) are present and the sensor signals delivered by these means are supplied to the control apparatus (30).

18. Communication apparatus (5) according to one of Claims 15-17, **characterized in that**
• at least individual instances of the display units (14; 214) are equipped with input means,
• the control apparatus (30) receives signals whose value is dependent on inputs via said input means of the display units (14; 214) and **in that**
• the control apparatus (30) takes these values as a basis for generating video signals and/or audio signals and delivers said signals to at least one of the head mounted displays (HMD).

19. Communication apparatus (5) according to one of the preceding claims, **characterized in that** the actuation of the display units (14; 214), the head mounted displays (HMD) that may be present and/or other reproduction devices is dependent on
• data stored in a memory (42; 44) inside the control apparatus (30),
• algorithms processed by a processor (40),
• inputs via input means of the display arrangement (10; 110; 210),
• inputs via input means of the display units (14; 214),
• data in memories of the display units (14; 214),
• signals received from outside via a unit (300),
• signals detected via sensors for gesture control
• and/or signals generated by a data glove.

20. Communication apparatus (5) according to one of the preceding claims, **characterized in that** the actuation of the display units (14; 214) and/or of the head mounted displays (HMD) that may be present is effected such that specific images, videos and/or sounds are reproduced at prescribed times.

21. Communication apparatus (5) according to one of the preceding claims, **characterized in that** the control apparatus (30) is designed such that a control program (app) can be loaded from outside and said control program allows a desired mode of operation.

## Revendications

1. Dispositif de communication (5) doté d'un système d'affichage (10 ; 110 ; 210) et d'un dispositif de commande (30) pour la mise en œuvre d'au moins un mode de fonctionnement, dans lequel le système d'affichage (10 ; 110 ; 210) comporte un corps pyramidal (12 ; 112 ; 212) ayant une base (26), une surface supérieure (20 ; 120) et plusieurs surfaces latérales (16 ; 116 ; 216), dans lequel il est prévu au moins quatre et au plus six surfaces latérales (16 ; 116 ; 216) et au moins quatre d'entre elles comportent respectivement des moyens pour recevoir un appareil d'affichage (14 ; 214), dans lequel le dispositif de commande (30) est disposé entièrement à l'intérieur du corps (12 ; 112 ; 212) du système d'affichage (10 ; 110 ; 210) et dans lequel le dispositif de commande (30) commande le système d'affichage (10 ; 110 ; 210) et les appareils d'affichage respectivement reçus (14 ; 214) en fonctionnement normal par l'intermédiaire d'une deuxième liaison (34) câblée et/ou sans fil, peut ainsi basculer entre des modes de fonctionnement prédéterminés et permet de ce fait, suivant le mode de fonctionnement, une communication entre les appareils d'affichage (14 ; 214).

2. Dispositif de communication (5) selon la revendication 1, **caractérisé en ce que** le dispositif de commande (30) alimente en énergie électrique le système d'affichage (10 ; 110 ; 210) et/ou les appareils d'affichage (14 ; 214) par l'intermédiaire d'une première liaison (32) câblée et/ou sans fil en mode de fonctionnement normal.

3. Dispositif de communication (5) selon la revendication 2, **caractérisé en ce qu'**il est prévu une autre liaison par l'intermédiaire de laquelle une batterie rechargeable reliée au dispositif de commande (30) peut être chargée.

4. Dispositif de communication (5) selon l'une des revendications 2 ou 3, **caractérisé en ce que** la première liaison (32) et/ou l'autre liaison est au moins partiellement câblée et comporte une liaison par fiche avec un adaptateur magnétique.

5. Dispositif de communication (5) selon l'une des revendications précédentes, **caractérisé en ce que** la deuxième liaison (34) est conçue de manière à ce que, en mode de fonctionnement normal, elle alimente également en énergie électrique le système d'affichage (10 ; 110 ; 210) et/ou les appareils d'affichage (14 ; 214).

6. Dispositif de communication (5) selon l'une des revendications précédentes, **caractérisé en ce que** la deuxième liaison (34) est au moins partiellement câblée et comporte une liaison par fiche avec un adaptateur magnétique.

7. Dispositif de communication (5) selon l'une des revendications précédentes, **caractérisé en ce que** des moyens de reproduction audio sont prévus à l'intérieur et/ou à l'extérieur du corps (12 ; 112 ; 212).

8. Dispositif de communication (5) selon l'une des revendications précédentes, **caractérisé en ce que** la surface de revêtement (20 ; 120) comporte un premier moyen de commutation (22) par l'intermédiaire duquel le dispositif de communication (5) peut être mis en marche et/ou arrêté.

9. Dispositif de communication (5) selon l'une des revendications précédentes, **caractérisé en ce qu'**au moins certaines des surfaces latérales (16 ; 116) comportent un deuxième moyen de commutation (17 ; 117) au moyen duquel des modes de fonctionnement souhaités peuvent être prédéterminés.

10. Dispositif de communication (5) selon l'une des revendications précédentes, **caractérisé en ce qu'**au moins certaines des surfaces latérales (16 ; 116) comportent un troisième moyen de commutation (119) qui sert de touche de saisie.

11. Dispositif de communication (5) selon l'une des revendications précédentes, **caractérisé en ce qu'**au moins certaines des surfaces latérales (16 ; 116) comportent au moins un passage de câble (150 ; 152).

12. Dispositif de communication (5) selon l'une des revendications précédentes, **caractérisé en ce qu'**au moins certaines des surfaces latérales (16 ; 116) comportent une douille de connexion (215) par l'intermédiaire de laquelle au moins l'un des appareils d'affichage (14 ; 214) peut être relié au dispositif de commande (30) et/ou à d'autres appareils (300 ; HMD).

13. Dispositif de communication (5) selon l'une des revendications précédentes, **caractérisé en ce qu'**il est prévu un module par l'intermédiaire duquel une communication sans fil et/ou câblée est possible entre
- le dispositif de commande (30) et les appareils d'affichage (14 ; 214), selon le cas, et
- d'autres appareils (300 ; HMD).

14. Dispositif de communication (5) selon l'une des revendications précédentes, **caractérisé en ce qu'**au moins certaines parties de celui-ci sont produites par moulage par compression et/ou au moyen d'une impression 3D.

15. Dispositif de communication (5) selon l'une des revendications précédentes, **caractérisé en ce qu'**il est prévu au moins un visiocasque (HMD) qui est relié au dispositif de commande (30) et qui est commandé par celui-ci à l'aide de signaux vidéo et/ou de signaux audio.

16. Dispositif de communication (5) selon la revendication 15, **caractérisé en ce que** les signaux vidéo sont conçus de manière à permettre la reproduction d'images tridimensionnelles pour une application de réalité virtuelle (VR), une application de réalité augmentée (AR) et/ou une application de réalité mixte (MR).

17. Dispositif de communication (5) selon l'une des revendications 15 ou 16, **caractérisé en ce qu'**il est prévu des moyens pour mesurer la position, la pose et/ou le déplacement dudit au moins un visiocasque (HDM) et les signaux de capteur émis par lesdits moyens sont transmis au dispositif de commande (30).

18. Dispositif de communication (5) selon l'une des revendications 15-17, **caractérisé en ce que**
• au moins certains des appareils d'affichage (14 ; 214) sont équipés de moyens de saisie,
• le dispositif de commande (30) reçoit des signaux dont la valeur dépend de saisies effectuées par l'intermédiaire desdits moyens de saisie des appareils d'affichage (14 ; 214) et **en ce que**
• le dispositif de commande (30) génère des signaux vidéo et/ou des signaux audio en fonction desdites valeurs et les délivre à au moins l'un des visiocasques (HMD).

19. Dispositif de communication (5) selon l'une des revendications précédentes, **caractérisé en ce que** la commande des appareils d'affichage (14, 214), des visiocasques (HMD) éventuellement présents et/ou d'autres appareils de reproduction de ce type dépend
∘ de données qui sont stockées dans une mémoire (42, 44) à l'intérieur du dispositif de commande (30),
∘ d'algorithmes qui sont traités par un processeur (40),
∘ de saisies effectuées par l'intermédiaire de moyens de saisie du système d'affichage (10 ; 110 ; 210)
∘ de saisies effectuées par l'intermédiaire de moyens de saisie des appareils d'affichage (14 ; 214),
∘ de données contenues dans des mémoires des appareils d'affichage (14 ; 214),
∘ de signaux qui sont reçus de l'extérieur par l'intermédiaire d'une unité (300),
∘ de signaux qui sont détectés par l'intermédiaire de capteurs de commande gestuelle,
∘ et/ou de signaux qui sont générés par un gant de données.

20. Dispositif de communication (5) selon l'une des revendications précédentes, **caractérisé en ce que** les appareils d'affichage (14 ; 214) et/ou les visiocasques (HMD) éventuellement présents sont commandés de manière à ce que des images, des vidéos et/ou des sons déterminés sont reproduits à des instants prédéterminés.

21. Dispositif de communication (5) selon l'une des revendications précédentes, **caractérisé en ce que** le dispositif de commande (30) est conçu de manière à ce qu'un programme de commande (App) puisse être chargé de l'extérieur et que celui-ci rende possible un mode de fonctionnement souhaité.
